Europäisches Patentamt

European Patent Office

Office européen des brevets

(11) Publication number: **0 338 731**
**A2**

## (12) EUROPEAN PATENT APPLICATION

(21) Application number: 89303693.9

(51) Int. Cl.⁴ **B29C 53/56**

(22) Date of filing: 13.04.89

(30) Priority: 22.04.88 US 184821

(43) Date of publication of application:
25.10.89 Bulletin 89/43

(84) Designated Contracting States:
DE FR GB

(71) Applicant: BRUNSWICK CORPORATION
One Brunswick Plaza
Skokie Illinois 60077(US)

(72) Inventor: McGee, James M.
230 Wedgewood Drive
Lincoln Nebraska 68510(US)
Inventor: Ayorinde, Ayodeji J.
5217 Goldenrod Circle
Lincoln Nebraska 68512(US)

(74) Representative: Allden, Thomas Stanley et al
A.A. THORNTON & CO. Northumberland
House 303-306 High Holborn
London WC1V 7LE(GB)

(54) Method of fabricating a filament wound structure.

(57) A method of fabricating a filament wound structure having a substantial thickness and of a relatively narrow width. The structure is wound with filaments in a circumscribing pattern to provide for continuous reinforcement in a circumferential direction. The filaments are impregnated with an appropriate matrix. The wound structure is compacted in a direction orthogonal to the direction of winding, and the compacted structure then is cured.

FIG. 2

EP 0 338 731 A2

# METHOD OF FABRICATING A FILAMENT WOUND STRUCTURE

## Field Of The Invention

This invention generally relates to filament wound structures and, particularly, to a method of fabricating a filament wound structure of a substantial thickness.

## Background Of The Invention

Filament winding methods are used to fabricate a wide variety of structures or products. Filaments normally are wound about a mandrel to a desired thickness and configuration. A matrix, such as a thermoplastic or thermosetting resin, is impregnated with the filaments, either during the winding process or by coating the filaments themselves, and the wound structure is cured to effect a rigid product. Such processes of filament winding structures are used to produce products ranging from rocket motor cases to small components of various machinery.

Heretofore, such filament winding processes have been efficient and relatively inexpensive when winding structures having relatively thin wall dimensions. The curing procedure usually involves the application of both heat and pressure. The pressure usually is exerted radially inwardly toward the axis of rotation of the structure or part, i.e. the axis of rotation of the mandrel. This procedure usually is carried out in a single step with such relatively thin-walled parts.

However, if a relatively thick-walled structure must be filament wound, the compaction cycle must be repeated after every few layers of the winding. This is because the radially inwardly exerted pressure tends to compress the winding upon itself. If too many layers of filaments are wound between compactions, the inward pressure tends to displace the windings causing them to wrinkle and destroy the continuity of the winding. Such repeated compaction steps heretofore have been used in fabricating such products as flywheels, for instance. Such a product as a flywheel is relatively thick-walled, but, of course, with a relatively thin width or lateral dimension. These types of products should be relatively inexpensive, but, because of the repeated compaction cycles necessary to build the winding to the desired thickness, the filament winding process is very time-consuming and expensive, resulting in an unnecessarily expensive product.

This invention is directed to solving these products and satisfying a need for a new and improved method of filament winding relatively thick, relatively narrow filament wound structures.

## Summary Of The Invention

An object, therefore, of the invention is to provide a method of fabricating a filament wound structure of a substantial thickness and of a relatively narrow width. Although the width is indeterminate, it is contemplated that the invention is readily applicable for filament wound structures having a width approximately equal to or less than the thickness of the structure. However, the use of this parameter in the following description and claims is not intended to be limiting, because the precise range of widths versus thickness may vary depending upon the types of filaments employed, the composition of the matrices, and other parameters involved.

The invention generally contemplates a method which includes the steps of winding the structure, product or part with filaments in a circumscribing manner to provide for continuous reinforcement in a circumferential direction. For instance, a hoop winding pattern is contemplated. However, other winding patterns also might be used within the scope of the invention. The filaments are impregnated with an appropriate matrix, such as a thermoplastic or thermosetting resin. The matrix can be applied either during the filament winding process or by coating the filaments themselves with a resin. It also is contemplated that the filaments can be wound in rovings of a multiplicity of fibers.

The circumscribed winding then is compacted in a direction orthogonal to the direction of the winding. In other words, the filaments normally would be laid up on a mandrel, or the like, defining an axis of rotation either of the mandrel or the winding head. The compaction is carried out generally parallel to the layers or parallel to the axis of rotation, i.e., generally normal or transverse to the original fiber direction.

Such a method utilizing a transverse direction compaction yields a wrinkle-free part with excellent strength properties at a much lower production cost than possible with conventional compaction methods which require repeated compaction and curing steps in a direction radially of the wound part.

Other objects, features and advantages of the invention will be apparent from the following detailed description taken in connection with the accompanying drawings.

## Brief Description Of The Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:

FIGURE 1 is a perspective view of a flywheel-type part fabricated according to the method of the invention;

FIGURE 2 is a somewhat schematic illustration of a compacting die as might be used in carrying out the method of the invention, the die being shown separated prior to compaction; and

FIGURE 3 is a view similar to that of Figure 2, with the die having been moved in a direction transverse to the wound fiber direction, for compacting the fibers during curing.

## Detailed Description Of The Preferred Embodiment

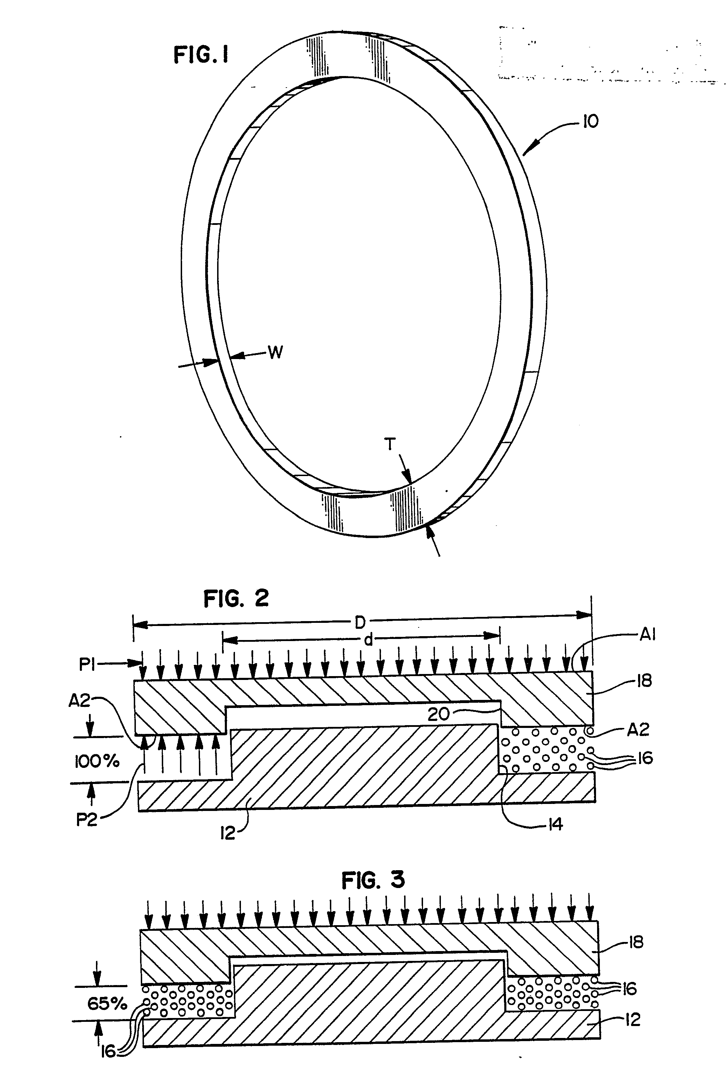

The invention contemplates a method of fabricating a filament wound structure, such as a flywheel as shown in Figure 1 and generally designated 10. Of course, it will be readily apparent from the description hereinafter that the method of this invention has wide utility in fabricating a wide variety of parts, such as rotors or the like, where the part has a relatively large thickness and a relatively thin width. It can be seen that flywheel 10 in Figure 1 has a thickness "T" which is several times larger than its width "W". Of course, these parameters should not be restricted, and a part wherein the width is equal to the thickness also has been fabricated with superior results. It is contemplated that the ratio of thickness to width is not to be considered limiting, because the invention sets forth a novel type of compaction, as described below.

Generally, the invention contemplates the steps of winding a structure or product, such as flywheel 10, with filaments in a circumscribing pattern to provide for continuous reinforcement in a circumferential direction. The reinforcing filaments could include graphite, carbon, Kevlar, fiberglass, quartz and other high performance fibers. Of course, with these parameters, the structure need not be circular, as shown, but can be elliptical, triangular, square or other polygonal shapes, with the fibers still providing continuous reinforcement in a circumscribing direction.

The wound filament fibers are impregnated with an appropriate curable matrix, such as a polyimide resin. Again, the particular type of resin is not limiting, and thermoplastic as well as thermosetting polymers are contemplated. The invention is quite useful when using matrices which have a high volume loss upon curing. This would include condensation type polyimides (such as PMR-15), polybenzimidazole (PBI), Avimid N, and other high temperature matrix systems. Thermoplastic matrices such as PEEK (polyetheretherketone), Ryton and K-II also could be used. To that end, the term "cure" (or its derivatives) is used herein and in the claims hereof in a somewhat generic sense. This term most often is used with a process involving a thermosetting resin. However, the invention is applicable when using many kinds of resins, thermoplastics and thermosets. A curing step in a process involving a thermoplastic resin may include the application of pressure and heat, just as with a thermosetting resin, the idea being to eliminate voids in the composite when the structure is allowed to cool and harden. The compaction of the impregnated fibers can take place before or during the "curing" step. In addition, the impregnated filaments must be sufficiently pliable during winding whether the matrix is thermosetting or thermoplastic. This is done by heating the filaments, winding in a heated environment, heating the mandrel, or other means or methods.

For example, a polyimide resin may have as much as 33% resin volume reduction which occurs during the curing process which takes place under conditions of temperature and pressure. This volume reduction is typical of polyimide resins which lose large volumes of water and methanol during cure. It is readily understandable that standard compaction methods, i.e. involving compaction in a direction radial to the winding pattern, will cause wrinkling of the fibers with thick filament wound laminates, unless multiple or repeated compaction and curing operations are employed. This is very costly, labor intensive and time consuming.

3

The invention contemplates the application of a compaction force in a direction orthogonal to the original fiber direction or parallel to the layers of the composite structure. This compaction force results in fiber movement that makes up for the loss in resin volume but maintains the original ply position. The volume loss of the matrix is compensated by a decrease of the transverse physical dimension. This retains all of the original relative fiber positions. The orthogonal force applied should be greater per unit area than any forces applied to the composite surfaces. This insures that the volume loss will be compensated for in a displacement that does not cause fiber wrinkling. This can be accomplished by using a physical stop to limit the compaction.

For instance, Figures 2 and 3 show somewhat schematically a type of tool which might be used in carrying out the transverse compaction concept of the invention.

Figure 2 shows a winding compaction tool part 12 which has a reduced diameter portion 14 about which fibers 16 are circumscribingly wound, such as with a hoop winding pattern. This tool part may be used as the actual mandrel, or the winding may be wound on a mandrel, and moved onto tool part 12. A second winding compaction tool part 18 is used, with a cutout 20 mating with reduced diameter portion 14, such that a surface area A2 engages the wound filaments in a direction transverse to the original fiber winding direction. Force is applied to a surface area A1, with a pressure P1. This results in a reactionary force P2 from the fibers which is greater per unit area than the pressure applied to surface A1. Figure 2 represents schematically the position of the die parts before compaction.

Figure 3 shows tool parts 12 and 18 moved toward each other to compact the filament wound structure in the transverse direction. It can be seen that a volume reduction on the order of 35%, in the transverse direction, has been effected. This compensates for the resin volume reduction of the matrix which occurs during curing. Of course, the pressure to be applied would depend upon the known volume reduction of various matrices or resins, such as the approximately 33% reduction for polyimide resin. The following formulations can be used to determine pressure P2 on the filament wound structure, using the area and pressure descriptions set forth above, along with the diameter dimensions shown in Figure 2:

$$\text{Force Over } A_1 = \frac{\pi}{4} D^2 \times P_1$$

$$\text{Force Over } A_2 = \frac{\pi}{4} (D^2 - d^2) \times P_2$$

For Equilibrium

$$\frac{\pi}{4} D^2 P_1 = \frac{\pi}{4} (D^2 - d^2) P_2$$

Then

$$P_2 = \frac{P_1 D^2}{(D^2 - d^2)}$$

As shown, these calculations can be used to determine the compaction force on wound fibers 16. As stated, the transverse force should be greater per unit area than the forces applied to the composite surfaces.

The method of providing a transverse force externally can be carried out in various manners, such as direct pressure from springs, a vacuum source, a press, or in an autoclave. An indirect method would be to use a trapped elastomeric material that provides the force as the trapped material expands when the curing temperature is applied.

A flywheel as shown in Figure 1, was produced according to the procedure shown in Figures 2 and 3, with two levels of compaction in the transverse or orthogonal direction. As an alternative procedure, a first compaction operation was used during imidization of the flywheel at approximately 430° F., and a second compaction operation was used during a final cure at 600° F. A graphite roving using a polyimide resin which creates approximately a 33% resin volume reduction during cure was employed. A compaction force in the orthogonal direction worked well and maintained the fiber orientation. Of course, the proper amount of compaction pressure must be calculated based upon the properties of the particular resin and its volume reduction during cure. Heretofore, fabricating a part, such as flywheel 10, would have required many compaction cycles radially through the thickness of the composite in small increments so that a significant amount of excess non-compacted fiber material never accumulated to cause wrinkling. It is readily apparent that the method of this invention has significant advantages in providing a method to produce cost effective products with fiber integrity as expected for the intended use of the product.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

**Claims**

1. A method of fabricating a filament wound structure of a substantial thickness and of a width approximately equal to or less than said thickness, comprising the steps of:
winding said structure with filaments in a circumscribing pattern to provide for continuous reinforcement in a circumferential direction;
impregnating the filaments with an appropriate matrix;
compacting the wound structure in a direction orthogonal to the direction of winding; and
curing the compacted structure.

2. A method of fabricating a filament wound structure of a substantial thickness, comprising the steps of:
winding said structure with layers of filaments in a circumscribing pattern to provide for continuous reinforcement in a circumferential direction until a desired thickness is formed;
impregnating the filaments with an appropriate matrix having a relatively high volume reduction during curing;
compacting the wound structure in a direction generally parallel to said layers; and
curing the compacted structure.

3. A method of fabricating a filament wound structure of a substantial thickness, comprising the steps of:
Winding said structure in layers of filaments;
impregnating the filaments with an appropriate matrix;
compacting the wound structure in a direction generally parallel to the layers; and
curing the compacted structure.

4. A method as claimed in any of claims 1 to 3, wherein said filaments are wound in rovings of a multiple of fibers.

5. A method as claimed in any of claims 1 to 3, wherein said filaments are impregnated with the matrix prior to winding.

6. A method as claimed in claim 1, wherein said filaments are wound in layers until a desired thickness is formed.

7. A method as claimed in claim 6, wherein said compacting step is carried out in a direction generally parallel to said layers.

8. A method as claimed in claim 1 or claim 3, wherein said matrix is a relatively high volume reduction matrix upon curing.

9. A method as claimed in claim 1 or claim 2, wherein said matrix comprises a polymide resin.

10. A method as claimed in any of claims 1 to 3, including a first said compacting step followed by curing at a given temperature, and a second such compacting step followed by a second curing at a higher temperature.

11. A method as claimed in claim 1 or claim 2, wherein said resin comprises a thermoplastic polymer.

12. A method as claimed in claim 1 or claim 2, wherein said resin comprises a thermosetting polymer.

13. A method as claimed in claim 1 or claim 2, wherein said structure is wound into a circular configuration.

14. A method as claimed in claim 1 or claim 2, wherein said structure is wound into an irregular configuration.

15. A method as claimed in claim 1 or claim 2, wherein said structure is wound into a polygonal configuration.

**FIG. I**

**FIG. 2**

**FIG. 3**